(19) Europäisches Patentamt
European Patent Office
Office européen des brevets

(11) **EP 0 749 006 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.$^7$: **G01F 1/84**

(21) Anmeldenummer: **95109152.9**

(22) Anmeldetag: **14.06.1995**

(54) **Coriolis-Massedurchflussaufnehmer mit einem einzigen Messrohr**

Coriolis mass flow sensor with a single measuring tube

Débitmètre massique selon le principe de Coriolis avec un seul tube de mesure

(84) Benannte Vertragsstaaten:
**CH DE DK ES FR GB IT LI NL**

(43) Veröffentlichungstag der Anmeldung:
**18.12.1996 Patentblatt 1996/51**

(73) Patentinhaber: **Endress + Hauser Flowtec AG**
**CH-4153 Reinach BL 1 (CH)**

(72) Erfinder:
• **Hagenmeyer, Heinrich**
**D-79618 Rheinfelden (DE)**

• **Wenger, Alfred Dr.**
**CH-8413 Neftenbach (ZH) (CH)**

(74) Vertreter: **Morstadt, Volker, Dipl.-Ing.**
**Endress + Hauser**
**Zentrale Patentabteilung**
**Postfach 2222**
**79574 Weil am Rhein (DE)**

(56) Entgegenhaltungen:
**EP-A- 0 317 340      EP-A- 0 578 113**
**EP-A- 0 598 287**

**Beschreibung**

Die Erfindung betrifft Massedurchflußaufnehmer nach dem Coriolis-Prinzip, die ein einziges Meßrohr haben, das in einem Glockenmode schwingt.

In der EP-A 317 340 ist ein Massedurchflußaufnehmer nach dem Coriolis-Prinzip beschrieben, der in eine Rohrleitung einfügbar ist und im Betrieb von einem zu messenden Fluid durchströmt wird,

- mit einem Schwingungssystem,

-- das ein einziges gerades, vom Fluid durchströmtes Meßrohr und
-- zwei entlang des Meßrohrs sich erstreckende und endseits an ihm befestigte Knotenmassen enthält, deren Gewicht so verteilt ist,

--- daß deren Schwerpunkt auf der Mitte der Achse des Meßrohrs liegt, und

-- das im Betrieb des Massedurchflußaufnehmers mittels mindestens eines Erregers zu einer saitenartigen Schwingung angeregt wird,

- mit einem Träger, insb. einem Trägerrohr, an dem das Schwingungssystem über Balgen endseits befestigt und über den das Schwingungssystem mit der Rohrleitung verbunden ist, und
- mit mindestens je einem Sensor für die einlaßseitigen bzw. auslaßseitigen Schwingungen des Meßrohrs.

Dieser Massedurchflußaufnehmer ist jedoch weder vollständig für alle vorkommenden Fluid-Dichten dynamisch ausbalancierbar, noch ist er besonders kompakt gebaut, hat also nicht eine möglichst kleine Baulänge.

In der EP-A 316 908 und in dem im Tagungsband "FLOMEKO '94, 7th International Conference on Flow Measurement", Glasgow, June 1994 veröffentlichten Aufsatz von H. Hagenmeyer et al. "Design of an Advanced Coriolis Mass Flowmeter using the Hoope Mode" ist ferner ein Massedurchflußaufnehmer nach dem Coriolis-Prinzip beschrieben, der in eine Rohrleitung einfügbar ist und im Betrieb von einem zu messenden Fluid durchströmt wird,

- mit einem einzigen geraden, vom Fluid durchströmten Meßrohr,

-- das im Betrieb des Massedurchflußaufnehmers mittels mindestens eines Erregers in einer seiner Eigenschwingungen derart angeregt wird,

--- daß es in einem Glockenmode schwingt, und

- mit einem Träger, insb. einem Trägerrohr, an dem das Meßrohr endseits befestigt und über den es mit der Rohrleitung verbunden ist, und
- mit mindestens je einem Sensor für die einlaßseitigen bzw. auslaßseitigen Schwingungen des Meßrohrs.

Untersuchungen haben nun jedoch gezeigt, daß derartige Massedurchflußaufnehmer, bei denen das Meßrohr im Glockenmode (im Englischen: hoop mode - "hoope" im obigen Titel ist ein Schreibfehler) schwingt, bei nicht-idealen Fluiden, insb. bei nicht-homogenen Fluiden, bei Mehrstoff-Fluiden, bei Fluiden mit hoher Viskosität oder bei Fluiden mit hoher Kompressibilität, einen erheblich größeren Meßfehler haben und daher erheblich ungenauer messen als Massedurchflußaufnehmer der eingangs zuerst genannten Art mit saitenartig schwingendem Meßrohr.

Dies ist u.a. darauf zurückzuführen, daß der aus dem Meßrohr mit dem zu messenden Fluid bestehende Hauptschwinger auf irreversible Weise Schwingungsenergie abgibt, z.B. durch Schallabstrahlung an die Umgebung. Der pro Schwingungsperiode abgegebene Energiebetrag dE/E ist dabei umgekehrt proportional zum Qualitätsfaktor Q des Schwingungssystems im tatsächlichen Schwingungsmode:

$$(dE/E)_{Periode} \sim 1/Q. \qquad (1)$$

Zur Minimierung der erwähnten Meßfehler, also zur Erhöhung der Meßgenauigkeit auch bei den erwähnten nicht-idealen Fluiden, ist es daher erforderlich, den Qualitätsfaktor Q so groß wie möglich zu machen.

Die Lösung dieser Aufgabe ergibt sich durch den Wortlaut von Anspruch 1. Eine bevorzugte Ausgestaltung der Erfindung enthält Anspruch 2.

Die Erfindung geht dabei von der Erkenntnis aus, daß es nicht nur genügt, den Qualitätsfaktor durch mechanisches Design so groß wie möglich zu machen - das den Term dE in der obigen Proportionalität festlegt -, sondern daß der Qualitätsfaktor noch dadurch weiter vergrößert werden kann, wenn in der obigen Beziehung (1) der Term E vergrößert wird, was bei der Erfindung durch das Mitschwingenlassen eines Hilfsschwingers gelingt.

Für dieses Schwingungssystem läßt sich dessen Qualitätsfaktor Q' als Funktion der Schwingfrequenz f ausdrücken:

$$1/Q' = c_1 f^{-1/2} + 2c_2 f^s, \qquad (2)$$

worin $c_1$, $c_2$ Konstanten und s eine Zahl zwischen 2 und 4 ist. Der erste Term beschreibt den viskositäts-bedingten Enegieverlust und der zweite Term den Enegieverlust durch Schallabstrahlung. Dieser Term überwiegt, rein rechnerisch betrachtet, mit steigender Frequenz f rasch den ersten Term, jedoch trägt der nach der Erfindung vorhandene Hilfsschwinger wesentlich dazu bei, daß die Frequenz f niedrig bleibt.

Durch die Erfindung lassen sich die Vorteile von Einrohr-Glockenmode-Massedurchflußmessern, nämlich z. B. deren vollständige dynamische Ausbalancierbarkeit und deren kompakte Bauweise, auch bei größeren Nennweiten des Meßrohrs, insb. oberhalb von 50 mm, für die oben erwähnten nicht-idealen Fluide aufrecht erhalten.

Die Erfindung wird nun anhand der Figuren der Zeichnung näher erläutert, in denen ein Ausführungsbeispiel des Massedurchflußaufnehmers dargestellt ist und in denen gleiche Teile mit denselben Bezugszeichen versehen sind.

Fig. 1 zeigt  eine vertikale, teilweise geschnittene Längsansicht des Massedurchflußaufnehmers

Fig. 2 zeigt  einen Schnitt durch das Meßrohr und den Träger entlang der Linie A-A von Fig. 1,

Fig. 3 zeigt  einen Schnitt durch das Meßrohr und den Träger entlang der Linie B-B von Fig. 1,

Fig. 4 zeigt  einen Schnitt durch das Meßrohr und den Träger entlang der Linie C-C von Fig. 1, und

Fig. 5 zeigt  teilweise im Schnitt eine Perspektivansicht von Teilen des Massedurchflußaufnehmers nach Fig. 1.

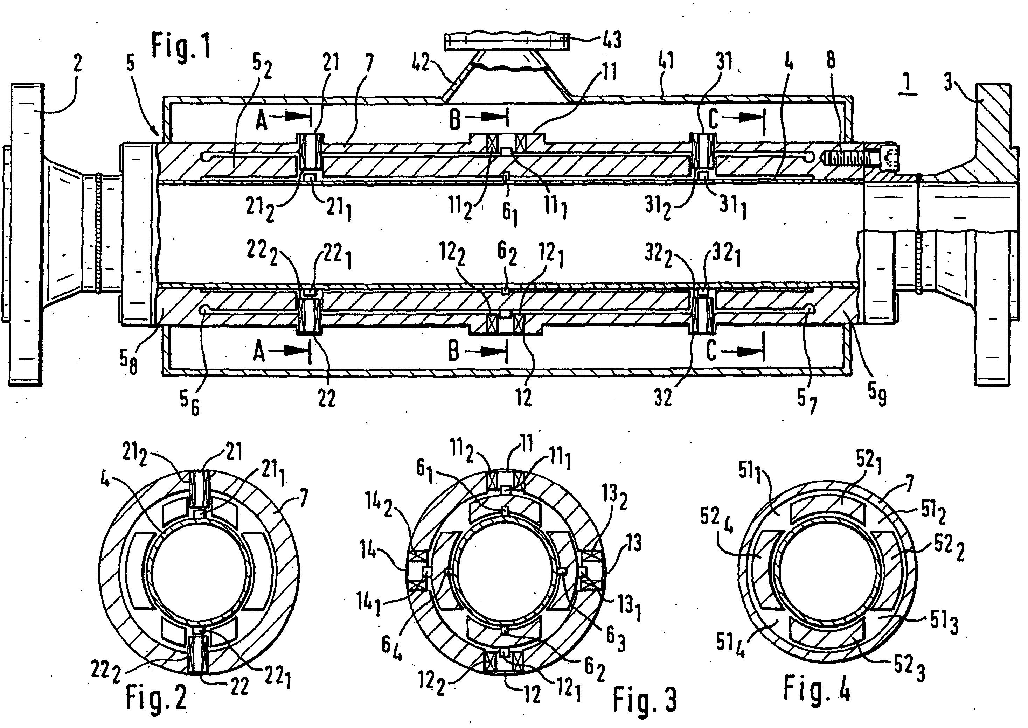

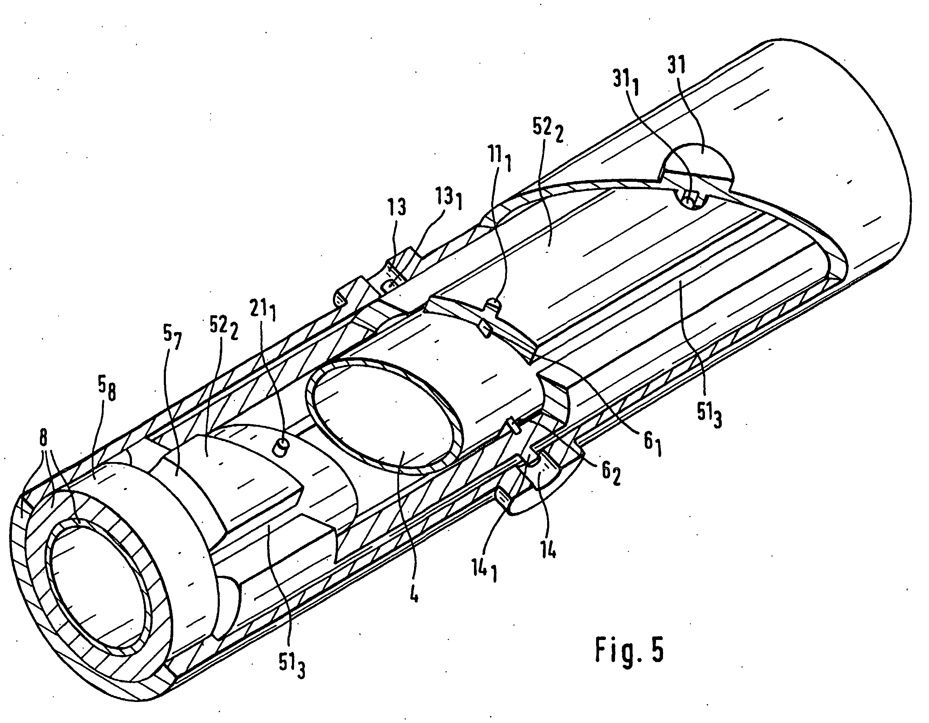

Der in Fig. 1 in vertikaler, teilweise geschnittener Längsansicht und in den Fig. 2 bis 4 in drei verschiedenen, jeweils zur Achse senkrechten Querschnittsebenen gezeigte Massedurchflußaufnehmer 1 ist in Fig. 5 zusätzlich noch perspektivisch dargestellt. In Fig. 5 sind einzelne Bereiche nur teilweise zu sehen, damit die an sich von äußeren Teilen verdeckten inneren Teile sichtbar sind. Die Fig. 5 wird daher unten nicht eigens beschrieben, sondern es sind in sie lediglich die zu den einzelnen Teilen gehörenden Bezugszeichen eingezeichnet.

Der Massedurchflußaufnehmer 1 ist in den Verlauf einer von einem zu messenden Fluid durchströmten, aus Gründen der Übersichtlichkeit jedoch nicht dargestellten Rohrleitung eines gegebenen Durchmessers, z.B. über Flansche 2, 3, einsetz- bzw. mit der Rohrleitung verbindbar.

Der Massedurchflußaufnehmer 1 hat ein Schwingungssystem, das ein einziges gerades, vom Fluid durchströmtes Meßrohr 4 als Hauptschwinger und einen das Fluid nicht berührenden Hilfsschwinger 5 enthält. Dieser hat in den Figuren der Zeichnung bevorzugt die Form eines viermal längsgeschlitzten Rohres, so daß sich im Bereich der Schlitze $51_1$, $51_2$, $51_3$, $51_4$ vier Balken $52_1$, $52_2$, $52_3$, $52_4$ ergeben, vgl. hierzu speziell die Fig. 4.

Durch diese mechanische Ausbildung des Hilfsschwingers 5 wird erreicht, daß das gesamte Schwingungssystem so dimensioniert ist, daß seine kinetische Energie mindestens doppelt so groß ist wie die kinetische Energie des Hauptschwingers, also des Meßrohrs 4.

Der Hilfsschwinger 5 ist ferner über derart ausgebildete und angeordnete Verbindungselemente mit dem Meßrohr 4 mechanisch gekoppelt, daß durch Corioliskräfte erzeugte Glockenmodi des Meßrohrs 4 möglichst wenig auf den Hilfsschwinger 5 übertragen werden.

Im bevorzugten Ausführungsbeispiel der Figuren sind vier derartige Verbindungselemente $6_1$, $6_2$, $6_3$, $6_4$ vorgesehen, die in der Mitte des Meßrohrs 4, auf dessen Umfang gegeneinander um 90° versetzt, angeordnet sind, vgl. hierzu speziell die Fig. 3.

Das Meßrohr 4 ist endseits im jeweiligen Ende $5_8$, $5_9$ des Hilfsschwingers 5 dicht, insb. vakuum-dicht, eingepaßt, z.B. eingeschweißt, eingelötet oder eingewalzt, vgl. zu letzterem die eigene ältere, noch nicht veröffentlichte EP-Anmeldung 95 81 0199.0.

Die Enden $5_8$, $5_9$ des Hilfsschwingers 5 sind ihrerseits im einen bzw. im anderen Ende eines Trägers fixiert, der bevorzugt, wie in den Figuren dargestellt, als Trägerrohr 7 ausgebildet ist.

Zur mechanischen Entkopplung der schwingfähigen Teile des Hilfsschwingers 5 von dessen nicht-schwingfähigen Teilen, also den Enden $5_8$, $5_9$, ist eine jeweilige Ringnut $5_6$, $5_7$ an der jeweiligen Übergangsstelle der schwingfähigen Teile in das entsprechende Ende vorgesehen. Diese Ringnuten $5_6$, $5_7$ sind in die Außenmantel-Fläche des Hilfsschwingers 5 eingearbeitet, nicht dagegen in dessen Innenmantel-Fläche.

Meßrohr 4, Hilfsschwinger 5 in Form des zur Bildung der vier Balken $52_1$, $52_2$, $52_3$, $52_4$ vierfach geschlitzten Rohres und Trägerrohr 7 sind im Ausführungsbeispiel koaxial zueinander angeordnet, vgl. die Fig. 2 bis 5.

Die Flansche 2, 3 sind entsprechend Fig. 1 am jeweiligen Ende von Meßrohr 4, Trägerrohr 7 und Hilfsschwinger 5, nämlich an der von diesen gebildeten, jeweils gemeinsamen Stirnfläche 8 (vgl. Fig. 5) durch Schrauben, von denen eine Schraube 8 rechts oben im Schnitt vollständig zu sehen ist, befestigt.

Im Betrieb wird das Schwingungssystem mit dem Meßrohr 4 und mit dem Hilfsschwinger 5 mittels mindestens eines Erregers in einer seiner Eigenschwingungen so angeregt, daß das Meßrohr 4 in einem Glockenmode (hoop mode), bevorzugt im (2, 1)-Glockenmode, schwingt. Die Balken $52_1$, $52_2$, $52_3$, $52_4$ des Hilfsschwingers 5 werden über die Verbindungselemente $6_1$, $6_2$, $6_3$, $6_4$ dagegen (lediglich) zu saitenartigen Biegeschwingungen angeregt.

Als Mittel, die das Meßrohr 4 zu solchen Resonanz-Glockenmode-Schwingungen anregen, sind beim Ausführungsbeispiel zwei elektrodynamische Erreger 11, 12 und zwei elektrodynamische Detektoren 13, 14 vorgesehen. Die Erreger 11, 12 und die Detektoren 13, 14 sind in der Mitte zwischen den endseitigen Stirnflächen 8 am Umfang des Trägerrohrs 7 angeordnet, vgl. die Fig. 1, 3 und 5.

Die Erreger 11, 12 und die Detektoren 13, 14 liegen jeweils auf einem Querschnittsdurchmesser des Trägerrohrs 7, welche beiden Durchmesser senkrecht zueinander sind.

Jeder Erreger 11, 12 und jeder Detektor 13, 14 umfaßt einen am Hilfsschwinger 5 befestigten jeweiligen Dauermagneten $11_1$, $11_2$, $11_3$, $11_4$ und eine am Trägerrohr 7 befestigte jeweilige Spule $12_1$, $12_2$, $12_3$, $12_4$, in die der Dauermagnet eintaucht und in der dieser hin- und herbewegbar ist. Zwei einander gegenüberliegende Dauermagnete befinden sich somit auch auf einem der erwähnten Querschnittsdurchmesser, ebenso wie im übrigen auch zwei einander gegenüberliegende Verbindungselemente $6_1$, $6_2$ bzw. $6_3$, $6_4$.

Zur Erregung eines Glockenmodes des Meßrohrs 4 werden die Spulen $12_1$, $12_2$ der Erreger 11, 12 von einer geeigneten Treiberschaltung mit Treiberstrom gespeist, die von Signalen der Spulen $12_3$, $12_4$ der Detektoren 13, 14 gesteuert ist. Einzelheiten dieser Schaltung liegen jedoch außerhalb des Rahmens der Erfindung, da diese sich ausschließlich mit der mechanischen Ausbildung des Massedurchflußaufnehmers beschäftigt.

Ferner ist mindestens je ein Sensor für die einlaßseitigen und die auslaßseitigen Schwingungen des Meßrohrs 4 vorgesehen. Diese Sensoren sind entlang des Meßrohrs 4 versetzt, bevorzugt im gleichen Abstand von den Erregern, angeordnet.

Beim Ausführungsbeispiel ist einlaßseitig ein erstes Paar von elektrodynamischen Sensoren 21, 22 und auslaßseitig ein zweites Paar von elektrodynamischen Sensoren 31, 32 vorhanden. Die beiden Sensoren sind am Umfang des Meßrohrs 4 auf einem Querschnittsdurchmesser angeordnet und fluchten in dessen Achsrichtung mit den entsprechenden Erregern, vgl. die Fig. 1, 2 und 5. Es liegen also z.B. der Erreger 11 und der Sensor 21 auf einer Geraden, die zur Achse des Massedurchflußaufnehmers parallel ist.

Jeder Sensor umfaßt einen am Meßrohr 4 befestigten Dauermagneten $21_1$, $22_1$, $31_1$, $32_1$ und eine am Trägerrohr 7 befestigte Spule $21_2$, $22_2$, $31_2$, $32_2$. In jede Spule taucht der zugehörige Dauermagnet ein und ist in dieser hin- und herbewegbar.

Die von den Sensoren erzeugten Signale werden in einer geeigneten Auswerte-Schaltung zu einem Massedurchfluß-Signal verarbeitet, deren Einzelheiten jedoch ebenfalls wie die der Treiberschaltung außerhalb des Rahmens der Erfindung liegen:

In Fig. 1 ist schließlich noch ein am Trägerrohr 7 fixiertes Gehäuse 41 gezeigt, das u.a. dem Schutz von Leitungen dient, die an die Erreger und die Sensoren angeschlossen, jedoch aus Gründen der Übersichtlichkeit nicht dargestellt sind. Das Gehäuse 41 ist mit einem halsartigen Übergangsstück 42 versehen, an dem ein nur teilweise gezeichnetes Elektronikgehäuse 43 zur Aufnahme der gesamten Treiber- und Auswerte-Elektronik des Massedurchflußaufnehmers 1 fixiert ist.

Es folgen in Form zweier Tabellen charakteristische Werte zweier konkret dimensionierter Massedurchflußaufnehmer A, B (Meßrohr 4 aus Titan, Hilfsschwinger 5 aus Stahl 1.4301):

Dabei bedeuten in Tabelle 2

| | |
|---|---|
| "Meßrohr 4 allein": | ein ohne mechanische Ankopplung des Hilfsschwingers im (2, 1)-Glockenmode schwingendes Meßrohr, |
| $E_{kin4}$: | die kinetische Energie des Meßrohrs "allein", |
| $E_{kin4+5}$: | die kinetische Energie des gesamten Schwingsystems, |
| $E_{ela4}$: | die elastische Energie des Meßrohrs "allein", |
| $E_{ela4+5}$: | die elastische Energie des gesamten Schwingsystems. |

Tabelle 1

|  | A | B |
|---|---|---|
| Durchmesser des Meßrohrs 4 | 84 mm | 84 mm |
| Wandstärke des Meßrohrs 4 | 2 mm | 2 mm |
| Querschnitt der vier Balken $52_1$, $52_2$, $52_3$, $52_4$ | 60 x 15 mm | 40 x 10 mm |
| Schwinglänge des Meßrohrs 4 und der vier Balken $51_1$ .. | je 500 mm | je 500 mm |

Tabelle 2

|  | A | | | |
|---|---|---|---|---|
| Dichte des Fluids in kg/m$^3$ | 0 | 500 | 995 | 1500 |
| Frequenz des Meßrohrs 4 allein in Hz | 757 | 548 | 452 | 392 |
| Frequenz des Schwingsystems in Hz | 345 | 337,9 | 331,1 | 324,6 |
| $E_{kin4+5}/E_{kin4}$ | 20,9 | 11,4 | 8,1 | 6,3 |
| $E_{ela4+5}/E_{ela4}$ | 4,3 | 4,3 | 4,3 | 4,3 |
|  | B | | | |
| Dichte des Fluids in kg/m$^3$ | 0 | 500 | 995 | 1500 |
| Frequenz des Meßrohrs 4 allein in Hz | 757 | 548 | 452 | 392 |
| Frequenz des Schwingsystems in Hz | 311 | 297,6 | 285,8 | 275,2 |
| $E_{kin4+5}/E_{kin4}$ | 9,8 | 5,6 | 4,1 | 3,4 |
| $E_{ela4+5}/E_{ela4}$ | 1,6 | 1,6 | 1,6 | 1,6 |

Aus Tabelle 2 ist zu erkennen, daß sich bei konstanter Amplitude der Schwingung des Schwingssystems durch das Ankoppeln des Hilfsschwingers sowohl eine erhebliche Vergrößerung der kinetischen Energie des Schwingsystems als auch eine beträchtliche Verlagerung der Schwingfrequenz erzielen läßt. Somit wird die von der obigen Gleichung (2) geforderte Herabsetzung der Schwingfrequenz erreicht.

**Patentansprüche**

1. Massedurchflußaufnehmer (1) nach dem Coriolis-Prinzip, der in eine Rohrleitung einfügbar und im Betrieb von einem zu messenden Fluid durchströmt wird,

- mit einem Schwingungssystem,

-- das ein einziges gerades, vom Fluid durchströmtes Meßrohr (4) als Hauptschwinger und
-- das einen das Fluid nicht berührenden Hilfsschwinger (5) enthält,

--- der über Verbindungselemente ($6_1$, $6_2$, $6_3$, $6_4$) mit dem Meßrohr (4) mechanisch gekoppelt ist, und

-- das im Betrieb des Massedurchflußaufnehmers mittels mindestens eines Erregers (11, 12) in einer seiner Eigenschwingungen derart angeregt wird,

--- daß das Meßrohr in einem (2, 1)-Glockenmode schwingt,

- mit einem Träger, insb. einem Trägerrohr (7), an dem das Schwingungssystem endseits befestigt und über den das Schwingungssystem mit der Rohrleitung verbunden ist, und
- mit mindestens je einem Sensor (21, 22; 31, 32) für die einlaßseitigen bzw. auslaßseitigen Schwingungen des Meßrohrs (4),
- wobei der Hilfsschwinger (5) zur Erzielung einer derartigen Dimensionierung,

-- daß die kinetische Energie ($E_{kin4+5}$) des Schwingungssystems mindestens doppelt so groß ist wie die

kinetische Energie ($E_{kin4}$) des Hauptschwingers,

- aus vier symmetrisch zur Achse des Meßrohrs (4) angeordneten und dazu parallel verlaufenden, an den Enden des Trägers und des Meßrohrs befestigten Balken ($52_1$, $52_2$, $52_3$, $52_4$) besteht und
- wobei die Verbindungselemente ($6_1$, $6_2$, $6_3$, $6_4$) zur Erzielung einer derartigen Ausbildung und Anordnung,

    - - daß durch Corioliskräfte erzeugte Glockenmodi des Meßrohrs (4) möglichst wenig auf den Hilfsschwinger (5) übertragen werden,

- in der jeweiligen Mitte der Balken ($52_1$, $52_2$, $52_3$, $52_4$) angeordnet und mit der Mitte des Meßrohrs verbunden sind.

2. Massedurchflußaufnehmer nach Anspruch 1, bei dem der Hilfsschwinger (5) ein zwischen seinen Enden mit vier Längsschlitzen ($51_1$, $51_2$, $51_3$, $51_4$) versehenes Rohr ist.

**Claims**

1. A mass throughflow sensor (1) operating on the Coriolis principle, which can be inserted into a pipeline and through which a fluid to be measured flows during operation,

    - having a vibration system

        - which contains a single straight measurement tube (4) through which fluid flows, as the primary vibrator, and
        - an auxiliary vibrator (5) which does not come into contact with the fluid and

            - which is mechanically coupled to the measurement tube (4) by way of connection elements ($6_1$, $6_2$, $6_3$, $6_4$), and

            - which during operation of the mass throughflow sensor is excited by means of at least one exciter (11, 12) at one of its natural vibrations, such that

                - the measurement tube vibrates in a 2,1 bell mode,

    - having a carrier, in particular a carrier tube (7), to which the vibration system is secured at one end and by way of which the vibration system is connected to the pipeline, and
    - having in each case at least one sensor (21, 22; 31, 32) for the vibrations of the measurement tube (4) on the inlet side and on the outlet side respectively,
    - the auxiliary vibrator (5), in order to achieve dimensioning such that

        - the kinetic energy ($E_{kin4+5}$) of the vibration system is at least twice as large as the kinetic energy ($E_{kin4}$) of the primary vibrator,

    - comprises four bars ($52_1$, $52_2$, $52_3$, $52_4$) which are arranged symmetrically with respect to the axis of the measurement tube (4) and extend parallel thereto, and are secured to the ends of the carrier and the measurement tube, and
    - the connection elements ($6_1$, $6_2$, $6_3$, $6_4$), in order to achieve a construction and arrangement such that

        - bell modes of the measurement tube (4) generated by Coriolis forces are transmitted as little as possible to the auxiliary vibrator (5),

    - are arranged in each case in the centre of the bars ($52_1$, $52_2$, $52_3$, $52_4$) and are connected to the centre of the measurement tube.

2. A mass throughflow sensor according to Claim 1, in which the auxiliary vibrator (5) is a tube provided between its ends with four longitudinal slots ($51_1$, $51_2$, $51_3$, $51_4$).

**Revendications**

1. Capteur de débit de masses (1) selon le principe de Coriolis, pouvant être inséré dans une conduite, et traversé pendant son fonctionnement par un fluide à mesurer,

   - présentant un système d'oscillation,

     -- qui contient un seul tube de mesure droit (4) traversé par le fluide comme oscillateur principal

     -- et un oscillateur auxiliaire (5) n'étant pas en contact avec le fluide,

       --- qui est accouplé mécaniquement au tube de mesure (4) par les éléments de raccordement ($6_1$, $6_2$, $6_3$, $6_4$), et

     -- qui pendant le fonctionnement du capteur de débit est excité par au moins un excitateur (11, 12) dans une de ses oscillations propres de manière

       --- à ce que le tube de mesure oscille dans un mode cloche (2, 1),

   - présentant un support, en particulier un tube support (7) auquel le système d'oscillation est fixé côté extrémité, et par l'intermédiaire duquel le système d'oscillation est connecté à la conduite, et

   - présentant au moins un capteur (21, 22 ; 31, 32) pour les oscillations côté entrée et/ou côté sortie du tube de mesure (4),

   - l'oscillateur secondaire (5) consistant, pour obtenir un dimensionnement tel

     -- que l'énergie cinétique ($E_{kin4+5}$) du système d'oscillation soit au moins deux fois supérieure à l'énergie cinétique ($E_{kin4}$) de l'oscillateur principal,

   - en quatre barres ($52_1$, $52_2$, $52_3$, $52_4$) disposées symétriquement par rapport à l'axe du tube de mesure (4) et le longeant parallèlement, fixées aux extrémités du support et du tube de mesure et

   - les éléments de raccordement ($6_1$, $6_2$, $6_3$, $6_4$) étant, pour l'obtention d'une configuration et d'une disposition telles que

     -- les modes cloche du tube de mesure (4) produits par les forces de Coriolis soient le moins possible transmis sur l'oscillateur auxiliaire (5),

   - disposés chacun au milieu des barres ($52_1$, $52_2$, $52_3$, $52_4$) et raccordés au milieu du tube de mesure.

2. Capteur de débit selon la revendication 1, sur lequel l'oscillateur secondaire (5) est un tube muni entre ses extrémités de quatre rainures longitudinales ($51_1$, $51_2$, $51_3$, $51_4$).

Fig. 1

Fig. 2

Fig. 3

Fig. 4

Fig. 5